# EUROPEAN PATENT APPLICATION

(11) **EP 2 887 107 A1**
(43) Date of publication of application: **24.06.2015**
(21) Application number: 14193272.3
(22) Date of filing: 14.11.2014
(51) Int. Cl.: G02B 5/18, G02B 1/02

(54) **Diffraction grating and diffraction grating producing method**

(30) Priority: 20.12.2013 JP 2013264224
(71) Applicant: CANON KABUSHIKI KAISHA, Ohta-ku Tokyo 146-8501 (JP)
(72) Inventor: Sukegawa, Takashi, Ohta-ku Tokyo (JP); Sugiyama, Shigeru, Ohta-ku Tokyo (JP); Iijima, Fumihiro, Ohta-ku Tokyo (JP)
(74) Representative: Williamson, Brian

(57) **Abstract**

A method for producing a blazed diffraction grating made of a crystal material of InP or InAs according to the present invention is characterized in that when the blazed diffraction grating is formed by forming a plurality of grating grooves by machining a process target surface of a workpiece W (step S150), the grating grooves are formed in such a manner that the surface that receives the largest quantity of incident light among surfaces constituting each grating is set on a crystal orientation (110) plane of the crystal material.

## Description

### BACKGROUND OF THE INVENTION

### Field of the Invention

The present invention relates to a diffraction grating used in an optical device such as a spectroscope, and relates to a diffraction grating producing method.

### Description of the Related Art

A diffraction grating has grating grooves shaped in a serrated type (blazed type), a sinusoidal, a rectangular waveform, or the like thereby to give a phase difference to incident light within one cycle of grating, so that diffracted light intensity properties can be selected in accordance with the purpose of use. The blazed type diffraction grating is a phase diffraction grating having grating grooves that have a triangular cross section. This grating is produced by sequentially forming engraved lines that are composed of grating grooves having a desired triangular cross section, by grinding with use of a grindstone, or shaving with use of a diamond cutting tool.

As one type of the blazed diffraction grating, a diffraction grating is available that is designed to use high-order diffracted light and is made of a crystal material. For the diffraction grating of this type, in order to obtain excellent optical properties, it is necessary that the machining for forming grating grooves should be performed in the ductility mode. At the boundary between the ductility mode and the brittle mode, a critical cutting thickness exists. It is known that the critical cutting thickness is dependent on the relationship between the crystal orientation of a sliding surface of crystal and a processed surface, the relationship between the crystal axis and the cutting direction, the relationship between the crystal axis and the cutting force direction (dependent on the tool rake angle and the cutting direction). For example, Japanese Patent Application Laid-Open No. 2003-075622 discusses that in a crystal material made of silicon (Si) or germanium (Ge), a surface to be grooved (a surface on which grating grooves are to be formed) is set within the (111) plane and the cutting direction is set within the (111) plane to form grating grooves by ultraprecision cutting using a single crystal diamond cutting tool.

Even if the crystal orientation (the plane orientation of crystal) of the surface to be grooved of a crystal material, the critical cutting thickness, and the like are used as parameters, however, a stable ductility mode cannot be obtained. In the case where a blazed diffraction grating is used as the transmission grating or the immersion (backside reflection type) grating, it is influenced by either at least one of the long side and the short side that form the grating groove. However, it is usual to use the grating in such a manner that the light incidence direction is set perpendicular to the short side of the cross section of the grating, and the surface roughness (surface accuracy) of the short side matters significantly, as is the case with the reflection diffraction grating.

Further, a crystal material of indium phosphide (InP) or indium arsenide (InAs) has been used as an optical material, but machining for forming grating grooves of the blazed diffraction grating with use of such a crystal material has not been proposed conventionally.

### SUMMARY OF THE INVENTION

The present invention in its first aspect provides a blazed diffraction grating specified in claims 1 to 3.

The present invention in its second aspect provides method for producing a diffraction grating as specified in claims 4 to 10.

The present invention in its third aspect provides method for producing a diffraction grating as specified in claim 11.

Further features of the present invention will become apparent from the following description of embodiments with reference to the attached drawings.

### BRIEF DESCRIPTION OF THE DRAWINGS

Fig. 1 is a schematic cross-sectional view illustrating a blazed diffraction grating of an embodiment of the present invention.
Fig 2 is a schematic perspective view illustrating a processing machine of an embodiment of the present invention.
Fig. 3 is a schematic cross-sectional view for describing a method for producing the blazed diffraction grating illustrated in Fig. 1.
Fig. 4 is a flowchart for describing a method for producing the blazed diffraction grating illustrated in Fig. 1.
Figs. 5A to 5D are cross-sectional views illustrating a workpiece at steps illustrated in Fig. 4, respectively.

### DESCRIPTION OF THE EMBODIMENTS

Various exemplary embodiments, features, and aspects of the invention will be described in detail below with reference to the drawings.

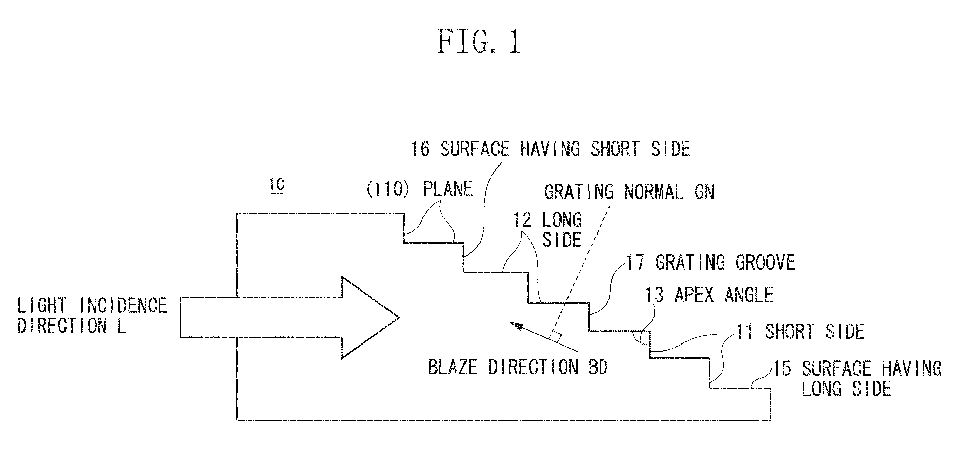

Fig. 1 is a schematic cross-sectional view illustrating a blazed diffraction grating (echelle grating) 10 that diffracts incident light. The blazed diffraction grating is a diffraction grating having grating grooves in a serrated form (blazed type), and has a high diffraction efficiency with respect to light having a particular order and wavelength. Each grating of the blazed diffraction grating has a blazed surface that receives the largest quantity of incident light among surfaces thereof, and a surface adjacent to the blazed surface (counter surface). A blazed diffraction grating 10 of the present embodiment is an immersion diffraction grating (transmission, backside reflection diffraction grating), as illustrated in Fig. 1, but alternatively, the blazed diffraction grating 10 may be configured as a reflection diffraction grating which deflects the light off the surface.

Each grating of the blazed diffraction grating 10 has an asymmetric triangular shape on a cross section composed of a short side 11 and a long side 12 that contains the blaze direction BD and the grating normal GN vertical to the blaze direction BD. The short side 11 and the long side 12 extend in directions vertical to the plane of the sheet that carries Fig. 1.

The angle θ formed between the short side 11 and the long side 12 is referred to as an apex angle 13, and satisfies θ=90° in the present embodiment. The apex angle 13 is approximately equal to an opening angle θ1 at the tip end of a cutting tool that is to be described later. In the blazed diffraction grating 10 of the present embodiment, among the surfaces forming each grating, a surface 16 having the short side 11 functions as a blazed surface, which receives the largest quantity of incident light, and the surface 15 having the long side 12 functions as a counter surface. The blazed surface and the counter surface of the blazed diffraction grating 10 illustrated in Fig. 1 are crossing perpendicularly. In a reflection-type blazed diffraction grating, however, the surface 15 may function as a blazed surface, and the surface 16 may function as a counter surface, in some cases. Further, the present invention is also applicable to a case where each grating does not has a triangular cross section, in a cross section that contains the blaze direction BD and the grating normal GN vertical to the blaze direction BD.

The blazed diffraction grating 10 tends to be used in a state in which the light incidence direction L is perpendicular to the surface having the short side, as illustrated in Fig. 1, so as to divide incident light into as many portions as possible, and the diffraction efficiency is dependent on the surface accuracy (surface roughness) of the short side 11. Therefore, it is required to process the surface 16 having the short side 11 at high accuracy.

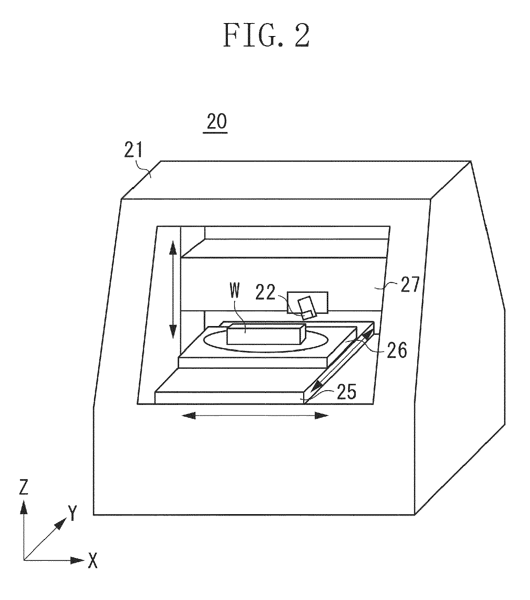

Fig. 2 is a schematic perspective view illustrating a processing machine 20 of the present embodiment, in which three axis directions orthogonal to one another are set as X, Y, and Z axes. The processing machine 20 is a device for producing the blazed diffraction grating 10 by forming a plurality of grating grooves 17 on a workpiece W made of an InP single crystal material or an InAs single crystal material. The InP crystal material transmits infrared light of 1 to 10 µm, and the InAs crystal material transmits infrared light from 3.5 up to 10 µm. Either material is suitable for an optical element for diffraction of infrared light. InP and InAs are compounds of indium (In) belonging to group 13 on the chemistry periodic table with phosphorus (P) and arsenic (As) belonging to group 15, respectively, and have the same crystal structure referred to as "Zincblende (B3)". Therefore, either of the materials is applicable to the present embodiment. Usually, a material that is obtained by the CVD method as a relatively easily available large-scale material for processing a crystal material of InP or InAs is a polycrystalline material. As a polycrystalline material has a crystal orientation that is not perfectly uniform, it is difficult to stably obtain processing properties that are dependent on the crystal axis. Therefore, it is difficult to obtain an excellent optical surface. For this reason, preferably a crystal material that is a single crystal of InP or InAs.

The processing machine 20 is an ultraprecision cutting processor that is capable of performing numerical control (NC control) of cutting in several tens of nanometer. The processing machine 20 forms grating grooves 17 by the shaper (planing) method wherein a diamond cutting tool 22 having a sharp tip that performs high precision processing transfer is used as a tool, and the cutting edge thereof is moved so as to cut the surface.

The processing machine 20 includes a high-rigidity housing 21 that is resistant against external oscillation, and an XY stage composed of an X stage 25 movable in the X direction and a Y stage 26 movable in the Y direction. A workpiece W is mounted on the XY stage. The diamond cutting tool 22 is mounted on a Z stage 27 that is movable in the Z direction. Though the diamond cutting tool 22 does not rotate in the present exemplary embodiment, a processing machine in which the diamond cutting tool 22 rotates may also be used.

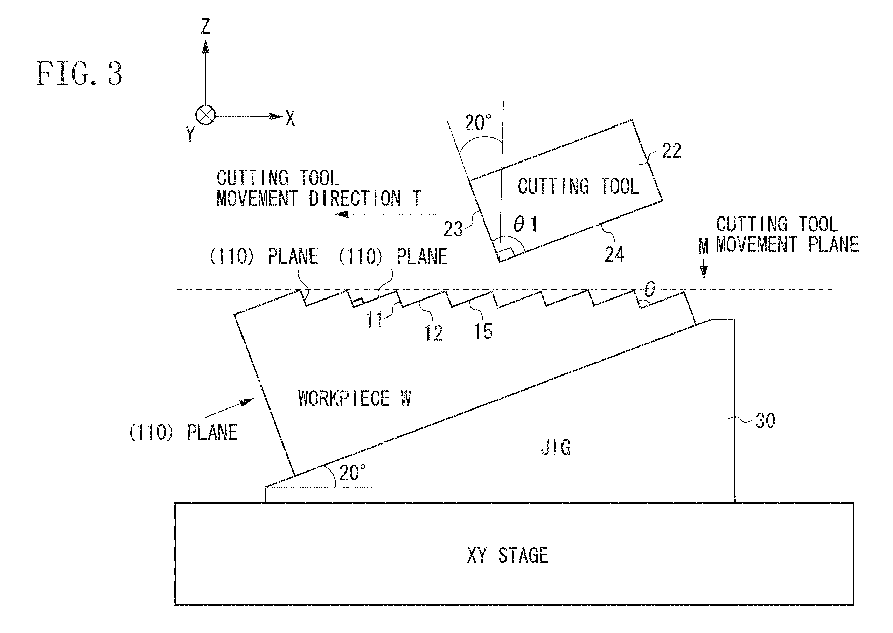

Fig. 3 is a schematic cross-sectional view illustrating the processing machine 20, the workpiece W, and the diamond cutting tool 22, wherein M indicates a cutting tool movement plane that is parallel to the blaze direction, which is parallel to the cutting tool movement direction T in which the diamond cutting tool 22 is moved relatively with respect to the workpiece W.

The diamond cutting tool 22 has at least two ridgeline cutting edges 23 and 24 that transfer a polygonal groove cross-sectional shape that functions as a grating groove 17, as illustrated in Fig. 3. An angle θ1 formed between ends of the ridgeline cutting edges 23 and 24 is substantially equal to an opening angle θ of the grating groove 17, and is 90° in the present embodiment. The ends of the ridgeline cutting edges 23 and 24 have as small roundness as possible, and the linearity accuracy of the ridgeline is extremely high at the ends. Therefore, it is possible to maintain the wall precision of the grating grooves of the blazed diffraction grating 10 at a high level.

The diamond cutting tool 22 is brought down toward the workpiece side in such a manner that the cutting amount is, for example, 0.2 µm in the Z direction at a position where the diamond cutting tool 22 and the workpiece W are opposed to each other. In this state, the XY stage is moved linearly or in a curving line in the X or Y direction. Relative movements of the diamond cutting tool 22 and the workpiece W provide a cutting speed, and the ridgeline cutting edges 23 and 24 cut the workpiece W.

In machining, what is moved may be the cutting tool or the workpiece, of course. Further, in order to avoid overloading onto the cutting tool, the cutting amount required in the Z direction may be divided and the cutting step may be repeated a plurality of times only in the divided cutting amount. During the processing, oil mist is jetted from the back side of the rake surface of the cutting tool so that chips are flown smoothly while processing heat is removed.

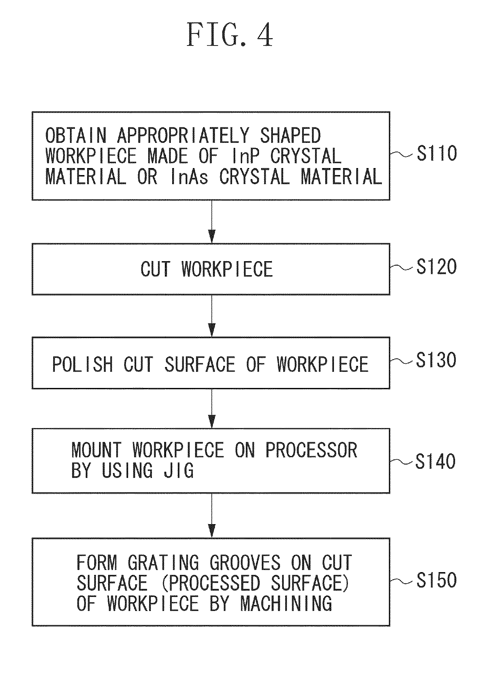

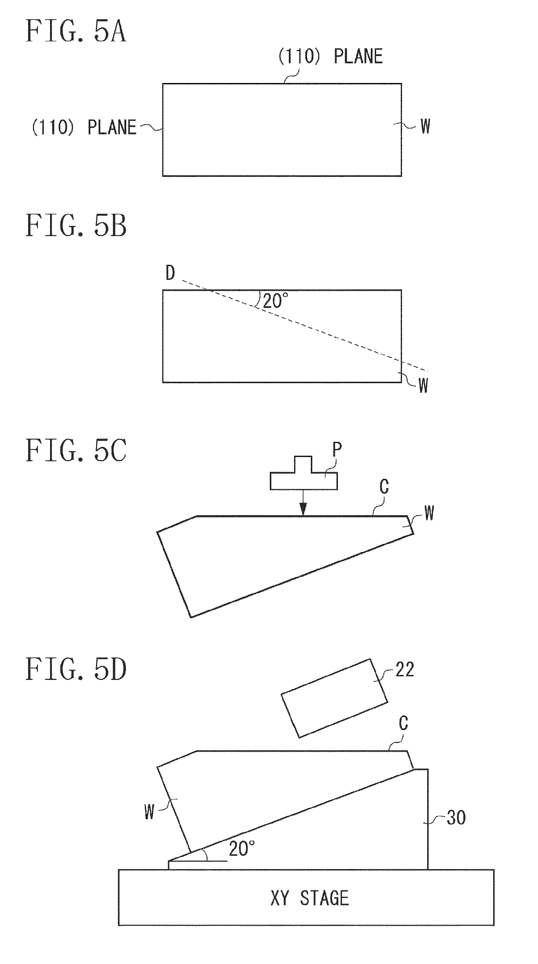

Hereinafter a method for producing a diffraction grating by using the processing machine 20 is described. Fig. 4 illustrates a flowchart for describing the method for producing (machining) a diffraction grating by using the processing machine 20, wherein S is an abbreviation of "step". Further, Figs 5A to 5D are schematic cross-sectional views illustrating the workpiece W in the steps illustrated in Fig. 4, respectively.

First, as illustrated in Fig. 5A, in step S110, a workpiece W made of a single crystal material of InP or InAs is obtained in an appropriate shape such as a cylindrical shape, a cubic shape, or a rectangular parallelepiped shape. For example, a cubic-shaped workpiece W is obtained by utilizing a crystal growing apparatus or the like. In the present embodiment, a rectangular parallelepiped workpiece W whose top surface (upper end face) and left side end face are both set on crystal orientation (110) planes is obtained.

Next, in step S120, the workpiece W obtained in step S110 is cut as indicated by a dotted line D in Fig. 5B. In the present embodiment, the tilt angle of the dotted line D with respect to the top surface is set to, for example, 20°. In the present embodiment, the cutting processor used in step S120 is not the processing machine 20, but a processing machine having lower accuracy.

Next, in step S130, as illustrated in Fig. 5C, the cut surface C of the workpiece W obtained in step S120 is polished by a polishing device P. In this case, the workpiece W may be mounted on the polishing device by using a jig 30 that is to be used in step S140.

Next, in step S140, as illustrated in Fig. 5D, the polished workpiece W is mounted on the above-described XY stage of the processing machine 20 via the jig 30 (S140). The jig 30 has a tilt angle of 20°, which causes the processed surface of the workpiece to become parallel to the surface of the Y stage 26.

The workpiece W is mounted on the processing machine 20 being placed on the jig 30 so as to be tilted at an angle of 20° with respect to the cutting tool movement plane M of the processing machine 20, whereby the cutting tool 22 is arranged so that the single crystal orientation of the plane M on which the cutting tool moves to process grooves, becomes (Tanθ_{A}, 1, 0) (θ_{A}=20°). In this way, the present embodiment uses the shaper method wherein the diamond cutting tool 22 is moved in parallel with the dispersion orthogonal direction of the diffraction grating groove surface (groove direction) so that the shape thereof is transferred.

Next, in step S150, a machining process for forming grating grooves on the cut surface C of the workpiece W is performed, whereby a state illustrated in Fig. 3 is obtained. The step S150 is a step for forming a plurality of grating grooves on the cut surface C to be processed. In the present embodiment, when a blazed diffraction grating is produced by using a single crystal of InP or InAs, the crystal orientation is selected so that the surface having the short side 11 is set on the (110) plane, and the processing is performed at or below the critical cutting thickness. By this excellent processing that minimizes brittle destruction, as compared with the case where the surface having the short side 11 is set on a plane other than the (110) plane, a high-grade diffraction element with high surface accuracy was obtained. In the case where the apex angle 13 is 90°, the surface having the short side 11 and the surface having the long side 12 were formed as the (110) planes. By reducing the surface roughness of the surface where the grating grooves are formed, to a lower level, a diffraction element that is advantageous in terms of the improvement of diffraction efficiency of a diffraction grating, the reduction of stray light, and the like, can be obtained.

According to an configuration illustrated in Fig. 3 as an example, a short side 11 and a long side 12 have a tilt surface at 20°. A blazed diffraction grating 10, in which a short side 11 and a long side 12 are arranged so as to have an angle of 90° therebetween, is processed so that a surface 16 having the short side 11 and a surface 15 having the long side 12 are set on (110) planes. By reducing the cutting thickness when finished, to 0.2µm or less, an excellent optical surface having a surface roughness of 10 nm or less was obtained.

On the other hand, in the case where such a crystal orientation was not selected but the surface 16 having the short side 11 was set on the (111) plane, for example, the surface roughness exceeded 100 nm even if the cutting thickness when finished was set to 0.2 µm or less, and the surface accuracy decreased. Conventionally, the crystal orientation of the cut surface at step S130 was set on the (111) plane or the like.

It is difficult to obtain a perfect crystal due to impurities, but the crystal orientation in the present exemplary embodiment refers to crystal dominance, and is not limited to the state in which when crystal orientations are evaluated, all of the orientations are completely aligned.

In the case where the blazed diffraction grating 10 is used as a reflection diffraction grating, the light incidence direction is influenced by the short side 11 and the long side 12, since light is incident on the grating in a direction tilted at a predetermined angle from the normal grating line vertical to the blaze direction illustrated in Fig. 1. Therefore, in this case, it is preferable that machining should be performed in such a manner that at least either the short side 11 or the long side 12 is set on the (110) plane. Of course, in the case where the apex angle 13 is 90°, both of the short side 11 and the long side 12 can be set on the (110) planes. Further , in the present embodiment, the diamond cutting tool 22 is used in machining, but it is possible to reduce the surface roughness to a low level in the processing of the (110) plane, as compared with the other crystal orientation surface processing, even if the cutting processing is carried out with use of a grindstone.

Further, such a diffraction grating may be incorporated into an optical device such as a spectroscope or a laser device, whereby an optical device with higher accuracy can be manufactured. A spectroscope includes at least a diffraction grating as described above, and a light receiving element that receives light diffracted by the diffraction grating. A laser device includes at least a light source that radiates laser light, and the diffraction grating that diffracts light from the light source.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A blazed diffraction grating on which a plurality of grating grooves is formed and that is made of a crystal material of InP or InAs,
wherein each of the grating grooves is formed so as to include two surfaces, and at least one of the two surfaces is set on a crystal orientation (110) plane of the crystal material.

2. The blazed diffraction grating according to claim 1,
wherein each of the grating grooves is composed of a blazed surface and a counter surface, wherein the blazed surface is set on a crystal orientation (110) plane of the crystal material.

3. The blazed diffraction grating according to claim 2,
wherein the blazed surface and the counter surface cross orthogonally.

4. A method for producing a blazed diffraction grating made of a crystal material of InP or InAs, the method comprising:
forming a plurality of grating grooves by machining a surface of a work piece so as to form the blazed diffraction grating,
wherein in the forming step, the grating grooves are formed so that each of the grooves includes two surfaces, and that at least one of the two surfaces is set on a crystal orientation (110) plane of the crystal material.

5. The producing method according to claim 4,
wherein the surface having a short side of a triangular cross section of each grating is arranged to be the surface receiving the larger quantity of the incident light between the two surfaces .

6. The producing method according to claim 5,
wherein the grating grooves are formed in such a manner that a surface having a long side of the triangular cross section is set on a crystal orientation (110) plane of the crystal material.

7. The producing method according to claim 4,
wherein the grating groove has an opening angle of 90°.

8. The producing method according to claim 4,
wherein the grating grooves are processed by the shaper method using a diamond cutting tool.

9. The producing method according to claim 4,
wherein the blazed diffraction grating is an immersion type diffraction grating.

10. The producing method according to claim 5,
wherein the grating grooves are formed by mounting the workpiece on a processing machine so that a surface receiving the largest quantity of the incident light becomes a (110) surface.

11. A spectroscope comprising:
a diffraction grating; and
a light receiving element configured to receive light diffracted by the diffraction grating,
wherein the diffraction grating is the diffraction grating according to any one of claims 1 to 3.

12. A laser device comprising:
a light source configured to radiate laser light; and
a diffraction grating configured to diffract the laser light radiated from the light source,
wherein the diffraction grating is the diffraction grating according to any one of claims 1 to 3.
